# EUROPÄISCHE PATENTANMELDUNG

(11) **EP 0 525 618 A2**
(43) Veröffentlichungstag der Anmeldung: **03.02.1993**
(21) Anmeldenummer: 92112539.9
(22) Anmeldetag: 22.07.1992
(51) Int. Cl.: B60N 2/34, B60P 3/38, B60N 2/04, B60P 3/36

(54) **Sitzbank für Reisemobile, Transporter od.dgl**

(30) Priorität: 22.07.1991 DE 9109022 U; 31.01.1992 DE 9201178 U; 31.01.1992 DE 9201183 U
(71) Anmelder: Strauch, Johannes, D-81737 München (DE)
(72) Erfinder: Strauch, Johannes, D-81737 München (DE)

(57) **Zusammenfassung**

Die vorliegende Erfindung betrifft eine Sitzbank für Reisemobile, Transporter od.dgl. mit einem Sitzteil und einem verschwenkbaren Rückenteil sowie mit einer Führungs- und Arretierungseinrichtung für eine Verstellung der Sitzbank in Fahrzeuglängsrichtung. Erfindungsgemäß zeichnet sich die vorgenannte Sitzbank durch einen Profilrohrrahmen (1) mit paarweise einander im wesentlichen gegenüberliegenden oberen und unteren Längsholmen (2, 3) sowie oberen und unteren Querholmen aus, wobei die unteren Längs- und Querholme (3, 5) einen Grundrahmen (1') bilden, mit an der Unterseite des Grundrahmens (1') gegenüberliegend paarweise drehbar gelagerten Laufrollen (8) sowie Gleitprofilkörpern (27) zum Eingriff in ein Paar, sich in Fahrzeuglängsrichtung erstreckenden Bodenführungsschienen (9) und mit Arretierungsbolzen (12), die, gesteuert von einer Betätigungswelle (10), die unteren Längsholme (3) im wesentlichen vertikal zum Arretierungseingriff mit den Bodenführungsschienen (9) durchsetzen und durch in Eingriffsrichtung federnd vorgespannte Übertragungshebel (11) mit der Betätigungswelle (10) verbunden sind.

## Beschreibung

Die Erfindung betrifft eine variable, multifunktionelle Sitzbank für Reisemobile, Transporter etc. mit einem Sitzteil und einem verschwenkbaren Rükkenlehnenteil, wobei die Sitzbank in Fahrzeuglängsrichtung verlagerbar ist sowie eine Lagerungseinrichtung hierfür, die auch für weitere Fahrzeugeinbauten verwendbar ist.

Auf dem Gebiet der Reisemobile, des Ausbaus von Transportern für Camping- und Freizeitzwecke etc. sind eine Vielzahl von Lösungen zur ortsveränderlichen Montage von Sitzbanken im Innenraum eines derartigen Transporters bzw. Reisemobils bekannt, wobei diese Sitzbänke ihrerseits wieder eine Vielzahl von Verstellmöglichkeiten aufweisen, z.B. gestatten, daß die Sitzbänke mit Sitzposition in Fahrtrichtung oder entgegen der Fahrtrichtung sowie zugleich als Liegeflächen durch Herunterklappen der Rückenlehne in im wesentlichen eine Ebene mit der Sitzfläche verwendet werden.

Überdies ist es bekannt, im Fahrzeugboden ein Paar Bodenschienen einzulassen, die sich im Innenraum bis zum Heck des Fahrzeuges erstrecken und in denen Gleitführungselemente des Sitzbankrahmens aufgenommen sind, um die Sitzbank in bezug auf die Längsachse des Fahrzeuges nicht nur an unterschiedlichen Stellen zu arretieren, sondern auch ein einfaches Herausnehmen der Sitzbank bzw. -bänke aus dem Fahrzeug nach hinten bzw. Einsetzen in dieses zu gestatten.

Allerdings bestehen in bezug auf die Längsverschiebung der Sitzbank innerhalb des Fahrzeugraumes in den Bodenschienen zum Teil Schwierigkeiten dergestalt, daß die Verschiebung selbst nicht in erwünschter Weise einfach und mit geringem Kraftaufwand vorgenommen werden kann, da zum Teil der Führungsabstand der Eingriffselemente in die Bodenschienen bzw. deren Verlegungsabstand verhältnismäßig gering ist und die verwendeten Gleitführungen zum Klemmen neigen und ein ruckfreies, glattes Verlagern der Sitzbank in Längsrichtung des Fahrzeuges vielfach nicht zulassen. Diese Schwierigkeiten werden zum Teil auch dadurch vergrößert, daß die Rahmenbaugruppe des Sitzteiles der Sitzbank vielfach aus versteiftem Blechmaterial besteht, das trotz der getroffenen Gegenmaßnahmen zu gewissen Durchbiegungen neigt, so daß die Gleitführungstoleranzen nachteilig beeinflußt werden. Die vorgenannten Probleme werden auch durch kombinierte Gleit-Rollführungen nicht beseitigt, bei denen die Primärführung der Sitzbank in den Bodenschienen durch T-Profil-Gleitführungskörper erfolgt.

Vielfach besteht überdies das Bedürfnis, unterschiedliche Fahrzeugbauten in einfacher Weise in das Reisemobil bzw. den Transporter einzusetzen, um dieses jeweiligen speziellen Verwendungszwekken, z.B. als mobiles Büro, für Reise und Camping oder für andere spezielle Zwecke, wie z.B. als Servicewagen, einzurichten.

Bekannte Sitzbänke der obengenannten Art werfen überdies Probleme in bezug auf den Umstand auf, daß die Sitzrückenlehnen, bedingt durch außenliegende Klappbeschläge, nur einteilig ausgeführt und in ihrer Gesamtheit zu einer Liegefläche umgeklappt werden können bzw. Schwierigkeiten auftreten, eine hinreichend bequeme und im wesentlichen gleichmäßig gepolsterte Liegefläche auch dann zu erreichen, wenn die Sitzbank zumindest rückenlehnenseitig in separate Rückenlehnen unterteilt ist und diese auch unabhängig voneinander umgeklappt werden sollen. Weitere Schwierigkeiten bestehen in einer angemessenen Ausführung der Kopfstützen, die zumeist integrale Metallstreben zum Einführen in die Sitzrückenlehne aufweisen und im unbenutzten, von der Sitzbank getrennten Zustand einen nicht unerheblichen Platzbedarf besitzen und eine gewisse Verletzungsgefahr mit sich bringen.

Der Erfindung liegt daher allgemein die Aufgabe zugrunde, eine Sitzbank zu schaffen, die die Möglichkeit bietet, die vorerwähnten Schwierigkeiten bei herkömmlichen, verstellbaren Sitzbänken zu vermeiden.

Der Erfindung liegt insbesondere die Aufgabe zugrunde, eine Sitzbank der eingangs genannten Art zu schaffen, die einen hinreichend steifen Aufbau besitzt und eine glatte Verlagerung der Sitzbank in Längsrichtung des Fahrzeuges mit geringem Kraftaufwand ermöglicht, so daß Voraussetzungen für eine äußerst variable Auslegung und bequeme Handhabung einer derartigen Sitzbank auch in bezug auf die Möglichkeit der Verwendung weiterer Funktionseinrichtungen geschaffen werden. Der Erfindung liegt ferner die Aufgabe zugrunde, eine entsprechende Lagerungseinrichtung für eine solche Sitzbank anzugeben, die überdies auch für andere Fahrzeugeinbauten verwendbar ist und in unkomplizierter Weise das Einsetzen, die Entnahme sowie die Befestigung der jeweiligen Funktionseinheit in bezug auf das Fahrzeug gestattet.

Die vorgenannte Aufgabe wird bei einer Sitzbank der eingangs genannten Art erfindungsgemäß dadurch gelöst, daß die Sitzbank einen Profilrohrrahmen mit paarweise einander im wesentlichen gegenüberliegenden oberen und unteren Längsholmen sowie oberen und unteren Querholmen und an der Unterseite eines durch die unteren Längs- und Querholme gebildeten Grundrahmens gegenüberliegend paarweise drehbar gelagerten Laufrollen sowie Gleitprofilkörpern zum Eingriff in ein Paar, sich in Fahrzeuglängsrichtung erstreckenden Bodenführungsschienen aufweist. Ferner sind Arretierungsbolzen vorgesehen, die, von einer Betätigungswelle gesteuert, die unteren Längsholme im wesentlichen vertikal zum Arretierungseingriff mit den Bodenführungsschienen durchsetzen und durch in Eingriffsrichtung federnd vorgespannte Übertragungshebel mit der Betätigungswelle verbunden sind.

Auf diese Weise wird eine Sitzbank mit äußerst verwindungsteifem Grundaufbau geschaffen, die sich mühelos und mit geringer Betätigungskraft durch die Laufrollenführung in Längsrichtung des Fahrzeuges verstellen läßt oder auch in bequemer Weise aus dem Fahrzeug entfernt werden kann.

Vorzugsweise besteht jede Laufrolle an den vier unteren Eckpunkten eines Grundrahmens des Profilrohrrahmens aus einem integralen Polyamidkörper mit einem mittleren Scheibenvorsprung, der in die Führungsnut der zugehörigen Bodenprofilschiene eingreift und mit sich beiderseits des Führungsscheibenvorsprunges erstreckenden Zylinderabschnitten, die an den oberen Laufflächen der zugehörigen Bodenführungsschiene abrollen.

Eine robuste und in ihrem Aufbau unkomplizierte, dabei äußerst funktionssichere Arretierungsvorrichtung für die Position der Sitzbank in Richtung der Fahrzeuglängsachse wird nach einer bevorzugten Ausführungsform der Erfindung dadurch gebildet, daß die Betätigungswelle sich transversal entlang des vorderen, unteren Querholmes des Profilrohrrahmens erstreckt und vorzugsweise in einem mittleren Bereich mit einem Betätigungspedal verbunden ist.

Die Betätigungswelle ist in Führungshülsen gelagert, die an dem unteren Querholm befestigt sind und nahe der beiden Enden der Betätigungswelle sind die Übertragungshebel, die als Flachstücke ausgebildet sind, nach rückwärts weisend festgelegt. Vorzugsweise ist in einer Öse am hinteren Ende des Übertragungshebels der zugehörige Arretierungsbolzen mit einem Ringkragen aufgenommen, so daß eine Losverbindung zur Entriegelungsbetätigung des federelastisch in Eingriffsrichtung zum Rasteingriff mit Arretierungsbohrungen in der zugehörigen Bodenschiene vorgespannten Arretierungsbolzens gebildet wird.

Nach einer weiteren, bevorzugten Ausführungsform der Erfindung bildet zumindest einer der oberen Längsholme des Profilrohrrahmens eine Aufnahme für eine Schwenkbetätigungsstange für die Betätigung der Rückenlehnen-Schwenkvorrichtung, die bei ungeteilter Rückenlehne einfach, bei geteilter Rückenlehne und zwei unabhängig verstellbaren Rückenlehnen jeweils für jede dieser Einzelrükkenlehnen vorgesehen ist.

Nach noch einer bevorzugten Ausführungsform der Erfindung sind im Bereich der hinteren Enden der oberen Längsholme des Profilrohrrahmens vertikal vorspringende Stützlagerkörper zur Schwenklagerung des Rückenlehnenteiles, das gegebenenfalls aus zwei Einzelrückenlehnen besteht, vorgesehen. Das Rückenlehnenteil ist durch Lenker, die am oberen Ende der zugehörigen Stützlagenkörper um eine Schwenkachse schwenkbar gelagert sind, schwenkbeweglich an dem Sitzteil der Sitzbank gelagert. Mit einem unteren Querarm des Rückenlehnenteiles sind nach einer weiteren, bevorzugten Ausführungsform der Erfindung paarweise im wesentlichen in der Hauptebene des Rükkenlehnenteiles sich erstreckende Heber angeordnet, die bei einer Verschwenkung des Rückenlehnenteiles aus einer im wesentlichen vertikalen Sitzposition in eine horizontale Liegeposition unter die Sitzbodenplatte des zugehörigen Sitzteiles greifen und das hintere Ende derselben anheben, um auf diese Weise eine gleichmäßig horizontale Liegefläche, bestehend aus Sitzund Rückenlehnenteil, zu bilden. Hierbei kann nach einer weiteren, vorteilhaften Ausführungsform der Erfindung ein an einem oberen Querrohrabschnitt des Rückenlehnenteiles schwenkbarer und in unterschiedlichen Winkellagen arretierbarer Kopfstützenhalter, der einen U-förmigen Rohrbügel bildet, als Abstützeinrichtung für das Rückenlehnenteil bzw. einer Einzelrückenlehne gegen den Fahrzeugboden verwendet werden. In seiner Benutzungslage wird auf den schwenkbeweglich an dem Rückenlehnenteil gelagerten Kopfstützenhalter ein Kopfstützenpolster aufgesteckt, das im übrigen bei Nichtbenutzung für die Kopfstütze auch in sonstiger Weise als Polster verwendet werden kann.

Die multifunktionale Sitzbank weist nach einem weiteren Ausführungsbeispiel der Erfindung eine Rückenlehnen-Verriegelungsvorrichtung auf, die eine am hinteren Querarm des Rückenlehnenteiles vorgesehene Eingriffsplatte mit einem Rasteingriffselement sowie eine an dem hinteren oberen Querholm schwenkbar gelagerte Schwenkplatte mit einem Gegenrasteingriffselement auf, wobei die Schwenkplatte in ihre Verriegelungseingriffsstellung mit der Eingriffsplatte durch eine Vorspannfeder vorgespannt ist und ein Betätigungsstück vorgesehen ist, das am Ende der durch den oberen Längsholm geführten Druckbetätigungsstange vorgesehen ist, so daß bei einer Druckbetätigung derselben die Schwenkplatte mit dem Gegenrasteingriffselement von der Eingriffsplatte entfernt und damit eine Verschwenkung des Rückenlehnenteiles aus einer aufrechten Sitzposition in eine horizontale Liegeposition ermöglicht wird.

Zur Lösung der vorgenannten Aufgabe betreffend die Schaffung einer sowohl für Sitzbänke als auch für verschiedene Fahrzeugeinbauten verwendbaren Lagerungseinrichtung ist erfindungsgemäß ein vierseitiger Grundrahmen mit Laufrollen und Gleitprofilkörpern an der Unterseite desselben vorgesehen, der eine Arretierungsvorrichtung zum Eingriff in die Bodenführungsschienenanordnung aufweist und mit Hilfe der Laufrollen entlang der Bodenführungsschienenanordnung bewegbar ist.

Der erfindungsgemäße Grundrahmen bildet ein für unterschiedliche Funktionseinheiten als Fahrzeugeinbauten, wie Büromöbelteile, Sitzbänke, Küchenteile etc., ein einheitliches Grundelement, auf dem die jeweiligen Fahrzeugeinbauten befestigt werden, wobei der Grundrahmen gegebenenfalls auch ein integrales Element eines Fahrzeugeinbauteiles bilden kann; dies ist insbesondere für Sitzbänke bevorzugt.

Vorzugsweise besteht der Grundrahmen aus miteinander verschweißten Hohlprofilholmen und weist paarweise einander gegenüberliegende Längs- und Querholme auf, wobei die Laufrollen im wesentlichen im Bereich der Eckpunkte des Grundrahmens an der Unterseite desselben drehbar gelagert sind, benachbart zu den an der Unterseite der Längsholme sich erstreckenden Gleitprofilkörpern, die in die Bodenführungsschienenanordnung eingreifen. Als Längsholme sind hierbei diejenigen Grundrahmenholme bezeichnet, die sich in Fahrzeuglängsrichtung bei eingebautem Grundrahmen erstrecken.

Vorzugsweise ist im wesentlichen parallel zu dem vorderen Querholm eine Betätigungswelle drehbar gelagert, die durch Übertragungshebel mit Arretierungsbolzen der Arretierungsvorrichtung verbunden ist, die sich ihrerseits vertikal durch die Längsholme hindurch und in lösbaren Arretierungseingriff mit den Bodenführungsschienen erstrecken, wobei die Betätigungswelle in Eingriffsrichtung federnd vorgespannt ist.

Weitere, bevorzugte Ausgestaltungen des Erfindungsgegenstandes sind in den übrigen Unteransprüchen dargelegt.

Die Erfindung wird nachstehend anhand von Ausführungsbeispielen und zugehörigen Zeichnungen näher erläutert. In diesen zeigen:
Fig. 1 einen Profilrohrrahmen einer Sitzbank für einen Transporter nach einem ersten Ausführungsbeispiel der vorliegenden Erfindung mit einteiligem Rückenlehnenteil in perspektivischer Darstellung,
Fig. 2 einen Profilrohrrahmen einer Sitzbank ähnlich derjenigen in Fig. 1, jedoch mit zwei einzeln verstellbaren Einzelrückenlehnenteilen in perspektivischer Darstellung mit eingeklappten Kopfstützenhaltern,
Fig. 3 eine perspektivische Darstellung des Profilrohrrahmens der Sitzbank nach Fig. 2 in seitlicher Darstellung und mit einer Einzelrückenlehne in einer aufrechten Sitzposition und einer weiteren Einzelrückenlehne in einer horizontalen Liegeposition,
Fig. 4 einen Grundrahmen nach einem Ausführungsbeispiel der vorliegenden Erfindung in perspektivischer Ansicht,
Fig. 5 eine perspektivische Seitenansicht eines vorderen Eckbereiches des Grundrahmens mit Rollführungs- und Arretierungselementen für die Sitzbank,
Fig. 6 eine Vorderansicht eines Teiles des Grundrahmens mit einer Laufrolle im Eingriff mit einer Bodenführungsschiene,
Fig. 7 eine schematische Seitendarstellung der Sitzbank mit einem Sitzrückenlehnenteil in aufrechter Position (Sitzstellung),
Fig. 8 eine schematische Darstellung der Sitzbank nach Fig. 6 mit heruntergeklappter Sitzrükkenlehne (Liegeposition),
Fig. 9 eine Rückenlehnen-Verriegelungsvorrichtung der Sitzbank,
Fig.10 eine Halterung des Kopfstützenhalters an einem oberen Querrohr der Sitzrückenlehne,
Fig.11 eine perspektivische Teilansicht eines weiteren Ausführungsbeispieles der Sitzbank, wobei das Sitzteil und das Sitzrückenlehnenteil durch Viergelenkbeschläge verbunden sind,

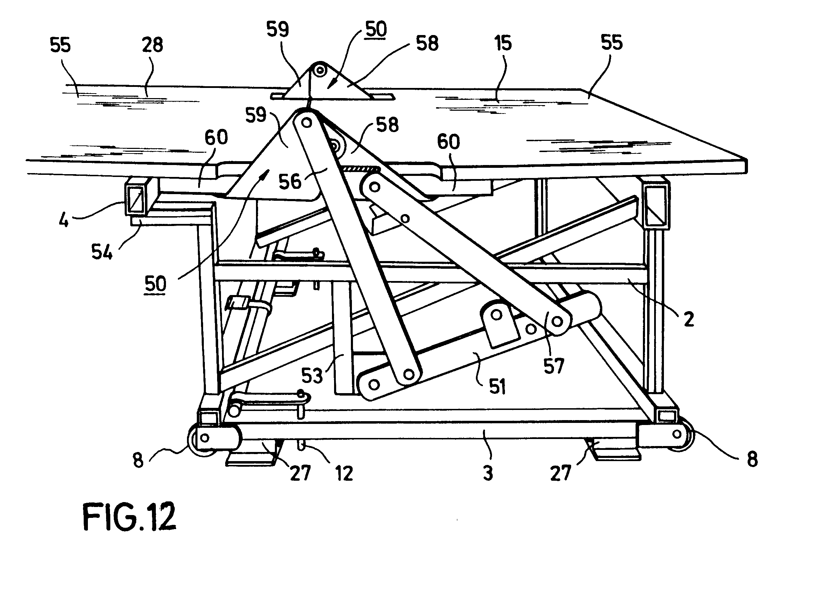

Fig.12 eine Darstellung ähnlich derjenigen in Fig. 10 mit heruntergeklappter Sitzrückenlehne (Liegeposition),
Fig.13 eine perspektivische Längsansicht für die Montage der Bodenführungsschienenanordnung gemäß einer Modifikation der Ausführungsform nach Fig. 6, und
Fig.14 einen Grundrahmen in schematischer Darstellung in Vorderansicht mit einem auf diesem befestigten Schreibtischteil als Fahrzeugeinbauteil.

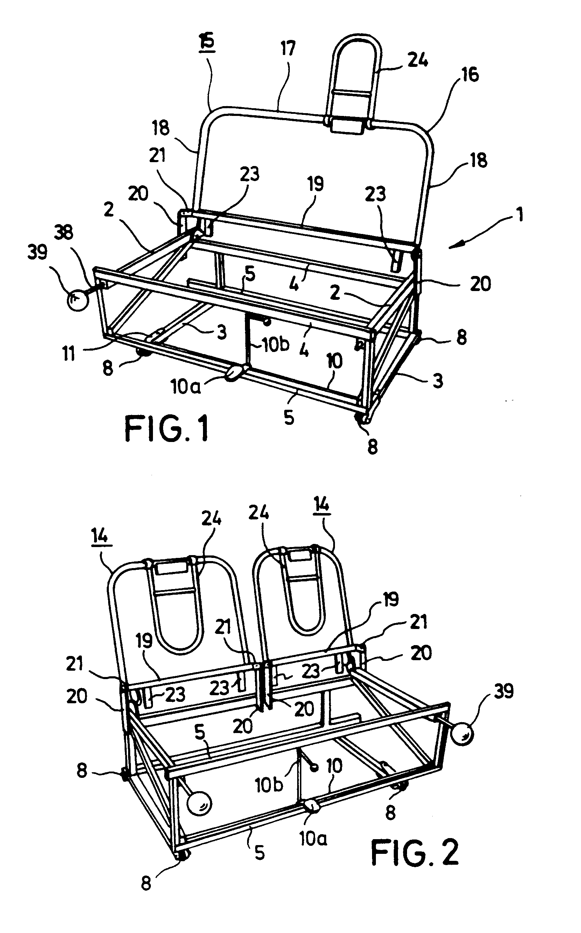

Zunächst wird mit Hinweis auf die Fig. 1 und 2 für eine Sitzbank mit ungeteilter Rückenlehne bzw. für eine Sitzbank mit zwei Einzelsitzen bzw. zwei Einzelrückenlehnen der Aufbau des Profilrohrrahmens sowie weiterer, mit diesem verbundener Funktionselemente erläutert.

Fig. 1 zeigt den Profilrohrrahmen 1 einer Sitzbank, wie sie für den Ausbau von Transportern, zum Einsatz in Reisemobilen etc., verwendet werden kann. Sämtliche Sitzpolsterteile sowie mit diesen verbundenen Sitz- oder Rückenlehnenplatten sind in diesen sowie den meisten der nachfolgenden Figuren und ihren Erläuterungen nicht mit dargestellt, um die Einzelheiten und die Grundstruktur der Sitzbank nach der vorliegenden Erfindung besser hervortreten zu lassen.

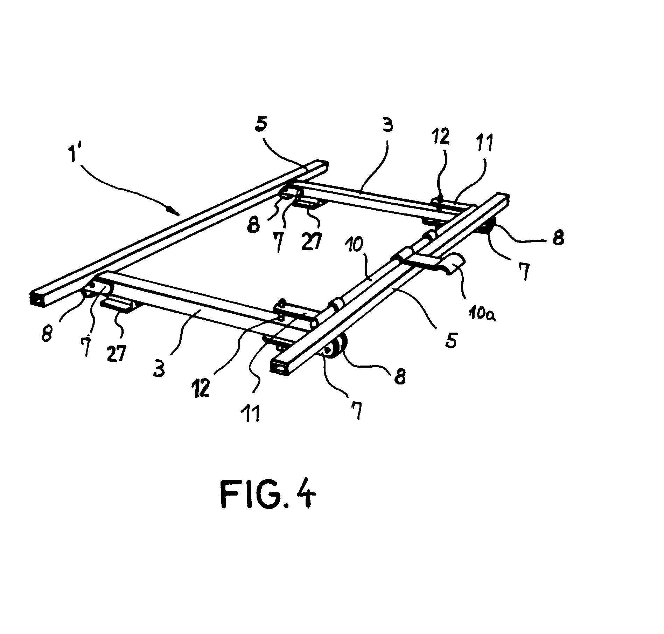

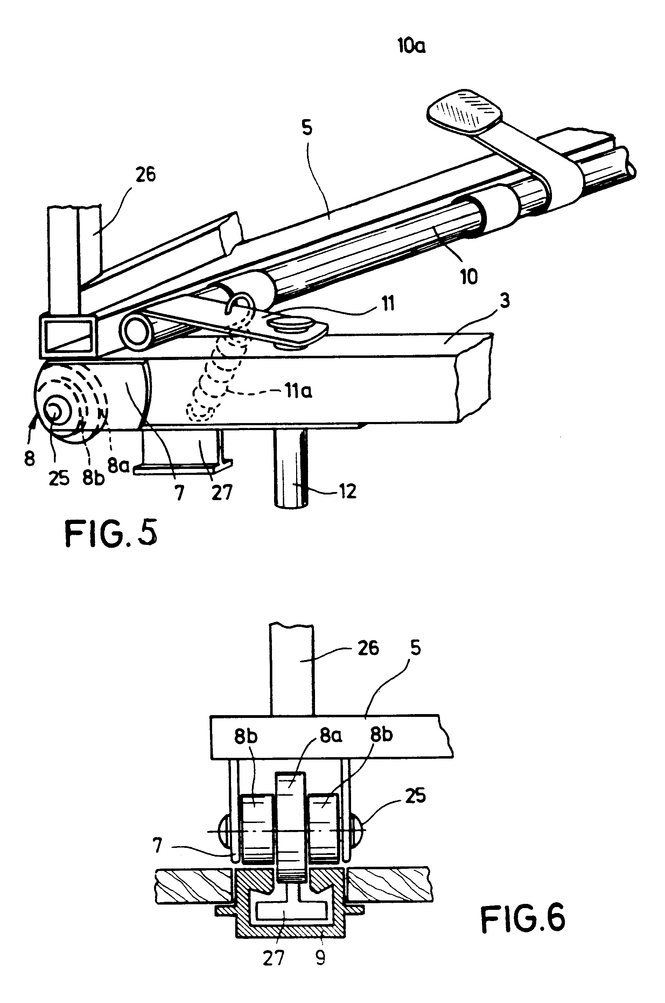

Der Profilrohrrahmen 1 besteht aus einem im wesentlichen quaderförmigen Profilrohrrahmen mit oberen und unteren Längsholmen 2, 3 sowie oberen und unteren Querholmen 4, 5, die jeweils paarweise beabstandet im wesentlichen einander gegenüberliegend angeordnet sind und eine verwindungssteife Schweißkonstruktion bilden. Wie nachstehend noch deutlicher erläutert wird, bilden die Längs- und Querholme 3, 5 einen Grundrahmen 1' und weisen die zwei unteren Längsholme 3 an ihren Enden Verstärkungsbleche 7 auf (vgl. Fig. 4 und 5), durch die jeweils eine Laufrolle 8 gelagert ist, die in Eingriff mit einer in den Fahrzeugboden eingelassenen, insbesondere auf die Karosserie aufgeklebten, Bodenführungsschiene 9 ist, wie dies Fig. 5 zeigt.

Auf diese Weise ist die Sitzbank in dem Fahrzeug an den vier unteren Eckpunkten des Grundrahmens 1' in einer Rollführung gelagert, gebildet durch die an den vier unteren Eckpunkten der Sitzbank im Eingriff mit einem Paar verhältnismäßig weit voneinander in Querrichtung beabstandeter Bodenführungsschienen 9, durch die die Sitzbank mühelos und in einer glatten, ruckfreien Verschiebungsbewegung in eine gewünschte Position verstellt und in dieser arretiert werden kann.

Wie aus den Fig. 1 und 2 ersichtlich ist, ist mit Rücksicht auf die Einbauverhältnisse der in Fig. 1 linke bzw. in Fig. 2 rechte untere Längsholm 3a in bezug auf die Querholme 4, 5 einwärts versetzt angeordnet, um auf diese Weise eine günstige Montageposition einerseits für die Bodenführungsschienen 9 zu erlangen und andererseits eine vorteilhafte Raumausnutzung und Sitzbreite zu erzielen.

Fig. 4 zeigt in schematischer, perspektivischer Darstellung ein Ausführungsbeispiel eines Grundrahmens 1', der als Basis-Lagerungsteil für eine Vielzahl unterschiedlicher Einbauten in ein Reisemobil verwendet werden kann und der seinerseits in einer Bodenführungsschienenanordnung (vgl.

Fig. 5 und 6) des Fahrzeugbodens rollverschieblich arretierbar eingesetzt werden kann. Der Grundrähmen 1' besteht aus miteinander verschweißten Hohlprofilholmen, d.h. aus paarweise einander gegenüberliegenden Längsholmen 3 sowie Querholmen 5, wobei die Längsholme 3 an ihren Enden in Verstärkungsblechen 7 gelagerte Laufrollen 8 aufweisen, die in Eingriff mit zugehörigen Bodenführungsschienen 9 bringbar sind, wie dies die Fig. 5 und 6 verdeutlichen. Zum Gleiteingriff mit den Bodenführungsschienen 9 zum unverlierbaren Festhalten des Grundrahmens 1 mit einem auf diesem befestigten Einbauteil bzw. als integraler Bestandteil des Profilrohrrahmens 1 sind an der Unterseite der Längsholme 3 T-Gleitprofilkörper 27 angeschweißt, wodurch verhindert wird, daß im Betriebszustand der Grundrahmen 1' durch vertikal aufwärtsgerichtete Kräfte aus seiner Verankerung mit den Bodenführungsschienen 9 gelöst wird. Eine Arretierungsvorrichtung für den Grundrahmen 1' innerhalb des Innenraumes des Reisemobiles, des Transporters etc., in dem der Grundrahmen 1' aufgenommen werden soll, weist eine transversale Betätigungswelle 10 auf, die an der Rückseite des vorderen Querholmes 5 sich parallel zu diesem erstreckt und durch Gleithülsen drehbar gelagert ist. Etwa in der Mitte der Betätigungswelle 10 ist mit dieser ein Betätigungspedal 10a fest verbunden. Eine Sicherungseinrichtung 10b (Fig. 2) ist vorgesehen, durch die eine Betätigung des Betätigungspedales 10a entweder blockiert oder freigegeben wird. An den Enden der Betätigungswelle 10 sind Übertragungshebel 11 angeschweißt, die an ihrem hinteren Ende eine Öse aufweisen, in der ein Halsabschnitt eines Arretierungsbolzens 12 in einer gelenkigen Losverbindung aufgenommen ist. Die Betätigungswelle 10 mit den Übertragungshebeln 11 ist, wie dies im einzelnen in Fig. 5 dargestellt ist, mit an diesen angreifenden Vorspannfedern 11 a in einer Eingriffsstellung für die Arretierungsbolzen 12 vorgespannt, wie sie in Fig. 5 (ohne Bodenführungsschienen 9) dargestellt ist. Die Bodenführungsschienen 9 (vgl. Fig. 5) weisen in Längsrichtung des Fahrzeuges beabstandete Bohrungen auf, in die die Arretierungsbolzen 12 jeweils verrastend eingreifen.

Auf diese Weise ist ein äußerst stabiler und verwindungssteifer Grundrahmen 1' geschaffen, auf dem verschiedenste Funktionseinheiten, wie Sitzbänke, Schreibtischeinheiten, Küchenteile, Utensilienbehälter etc. in der Bodenführungsschienenanordnung eines Transporters, Reisemobiles etc. aufgenommen werden können, wobei der Grundrahmen 1' entweder lösbar oder integral einstückig mit dem jeweiligen Einbauteil verbunden sein kann. Auf diese Weise ist es möglich, in unkomplizierter Weise ein Reisemobil, Transporter durch Umrüsten mit verschiedenen Funktionseinheiten an spezielle Verwendungen anzupassen.

Fig. 5 zeigt einen Eckbereich des Grundrahmens 1 noch einmal im einzelnen, nämlich die drehbare Lagerung der Betätigungswelle 8 hinter dem Querholm 3 sowie die Verbindung der Übertragungshebel 10 mit den Enden der Betätigungswelle 8 mit einer Vorspannfeder 10a zur Vorspannung der Arretierungsbolzen 11 in ihrer Eingriffsstellung. Zugleich ist noch einmal die Anordnung der Gleitführungskörper 7 an der Unterseite der Längsholme 2 sowie die Aufnahme der Lagerungsrollen 5 in an den Enden der Längsholme 2 angeschweißten Verstärkungsbleche 4 ersichtlich.

Fig. 6 zeigt eine Ausführungsform für den Eingriff der Laufrolle 5 in die Bodenführungsschiene 6, wobei zugleich auch der Eingriff des Gleitprofilkörpers 7 in die Bodenführugnsschiene 6, die im übrigen bündig mit den Fahrzeugbodenplatten in den Fahrzeugboden eingelassen ist, dargestellt ist. Die Laufrolle 5 besteht vorzugsweise aus Polyamid und besitzt einen mittleren Führungsscheibenvorsprung 5a zum Eingriff in die Bodenführungsschiene 6 sowie sich beiderseits des Führungsscheibenvorsprunges 5a erstreckende Laufzylinderabschnitte 5b mit gegenüber dem Führungsscheibenvorsprung 5a verringertem Durchmesser, die in Rollkontakt mit oberen Laufflächen der Bodenführungsschiene sind. Die Laufrolle 5 ist durch eine Achse 22 in den Verstärkungsblechen 4 drehbar gelagert.

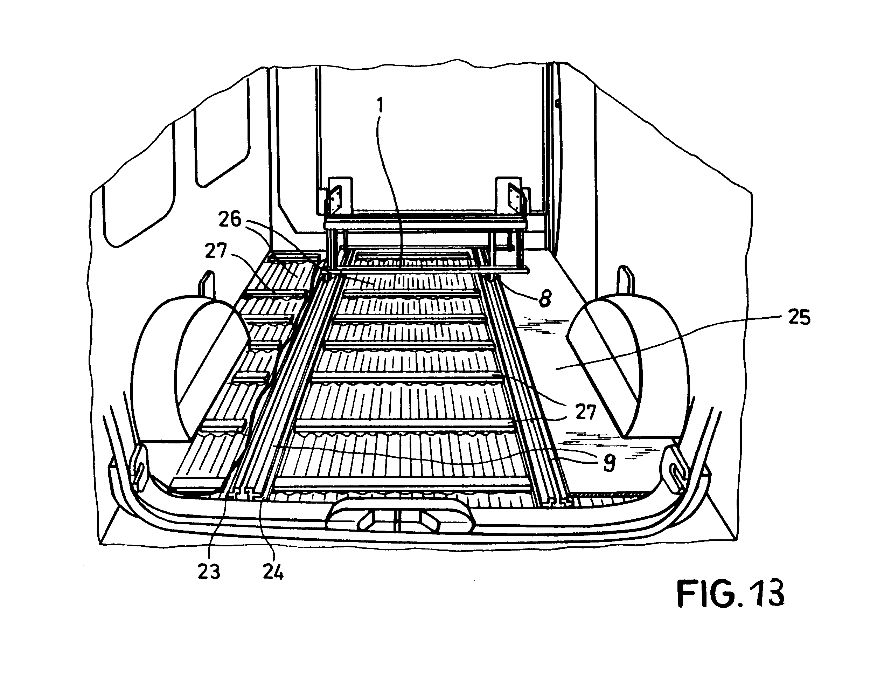

Aus Fig. 13 ist in perspektivischer Längsansicht die Montage einer modifizierten Bodenführungsschienenanordnung gezeigt. Die Bodenführungsschienen 6 erstrecken sich im wesentlichen über die gesamte, zur Verfügung stehende Länge eines Nutzinnenraumes eines Reisemobiles und sind nach hinten offen, zur rollverschieblichen Aufnahme eines Fahrzeugeinbauteiles, in Fig. 5 des Gestells einer Sitzbank, die jedoch auch durch andere, auf dem Grundrahmen 1 montierte Aufbauten ersetzt sein kann, je nach Zweckbestimmung des Fahrzeuges. Im vorliegenden Fall weisen die Bodenführungsschienen 6 seitlich vorspringende Montageflansche 23 auf, die der Abstützung einer den Fahrzeuginnenboden bildenden Bodenplatte 25 dienen und sind mit seitlich und bündig mit der Unterseite der jeweiligen Bodenführungsschiene 6 vorspringenden Befestigungsflanschen 24 versehen. Als Trägerelement für die unverlierbare Befestigung der Bodenführungsschienen 6 ist der Fahrzeugrahmen, insbesondere im Bereich heckseitiger Profilverstärkungen, verwendet. Mit Hilfe eines dauerelastischen Industrieklebers werden die aus einem Leichtmetall-Strangprofil bestehenden Bodenführungsschienen 6 mit ihrer Unterseite einschließlich der sich seitlich erstreckenden Befestigungsflansche 24 auf einen Bereich eines Bodenbleches 26 elastisch aufgeklebt, der angemessen durch den Fahrzeugrahmen abgestützt ist. Auf das Bodenblech 26 werden im übrigen Distanzleisten 27 aufgelegt, die mit den Seitenflanschen 23 der Bodenführungsschienen 6 bündig sind und der Abstützung der Bodenplatten 25 des Fahrzeugbodens dienen. Die Befestigungsflansche 24 werden im übrigen durch hier nicht gezeigte Verschraubungen mit einem Teil des Fahrzeugrahmens verschraubt.

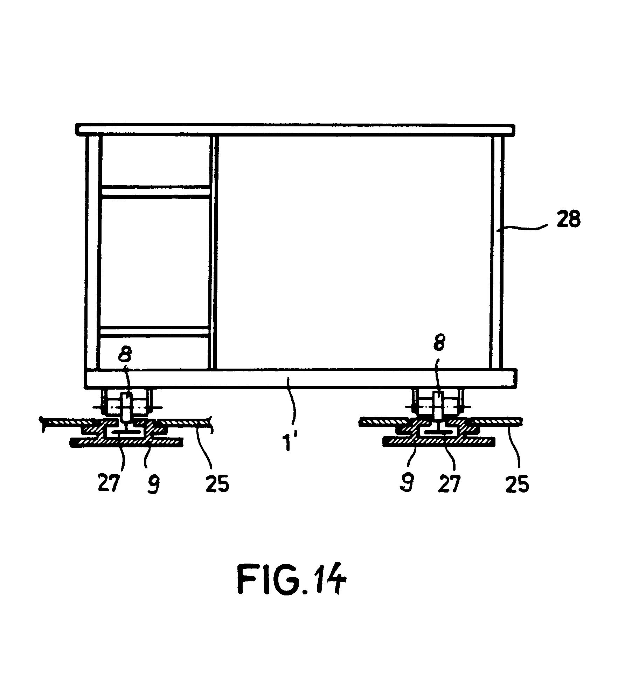

Fig. 14 zeigt in einem weiteren Ausführungsbeispiel der Erfindung die Befestigung eines Schreibtischteiles 28 in schematischer Darstellung auf dem Grundrahmen 1. Auf diese Weise kann z.B. auch in Verbindung mit einer Sitzbank leicht ein Reisemobil mit einer Büroeinrichtung ausgestattet werden. Das Schreibtischteil 28 ist zusammen mit dem Grundrahmen 1 in die Bodenführungsschienen 6 in gleicher Weise einsetzbar, wie dies vorher für die Sitzbank erläutert wurde. Anstelle des Schreibtischteiles 28 können auch andere Fahrzeugeinbauten, wie Küchenteile, Behälter zur Aufnahme verschiedener Utensilien, Regalteile, Einbaumöbel u.ä., je nach Zweckbestimmung des Transporters oder Reisemobiles, Bürofahrzeuges etc. fest mit dem Grundrahmen 1 verbunden werden bzw. gegebenenfalls ein integrales Element (Sitzbank) mit dem Grundrahmen 1 bilden.

Der Grundrahmen 1 erweist sich somit als ein besonders vorteilhaftes, verwindungssteifes und für alle Einsatzzwecke gleichermaßen anwendbares Lagerungsteil für die vorteilhafte Aufnahme verschiedener Einbauten in einem Transporter, Reisemobil oder dgl.

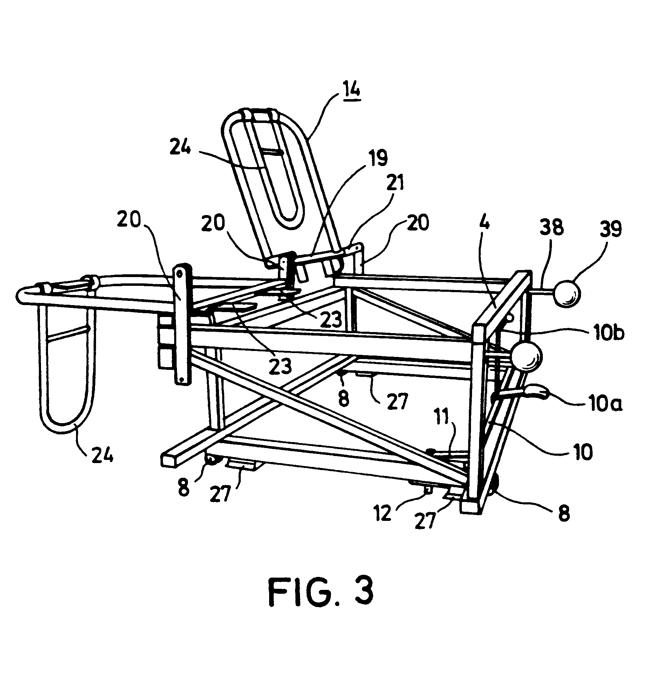

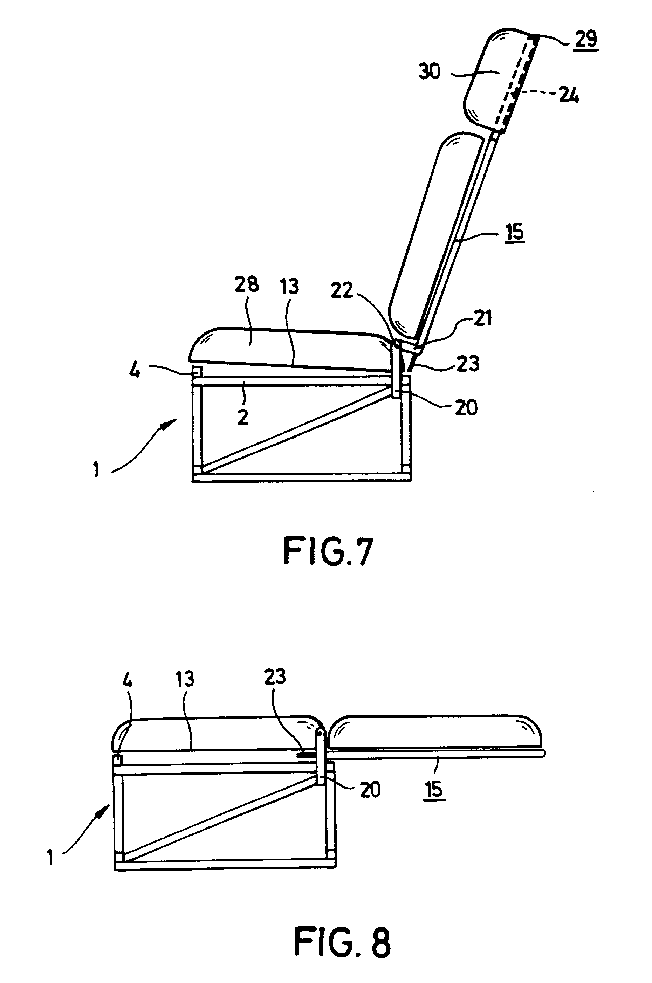

Wie aus den Fig. 1 und 2 für die mit dem Grundrahmen 1' einstückige Sitzbank ersichtlich ist, ist der hintere obere Querholm 4 gegenüber dem vorderen oberen Querholm 4 etwas tiefer gelegt und der vordere, obere Querholm 4 wird durch ein Profilrohr mit einem aufrecht angeordneten Rechteckquerschnitt gebildet (s. Fig. 3) und dient der Abstützung eines vorderen Endes einer hier nicht gezeigten Sitzbodenplatte 13 des hier im übrigen nicht gezeigten Sitzteiles der Sitzbank, wobei diese Sitzbodenplatte 13 (vgl. Fig. 6, 7) in einer Normalsitzposition, wie sie in den Fig. 1 und 2 gezeigt ist, mit ihrem Vorderende durch den oberen vorderen Querholm 4 sowie die hinteren Endbereiche der oberen Längsholme 2 abgestützt ist. Bei geteilter Sitzbank mit getrennten Sitzen, wie in Fig. 2 gezeigt, stützen sich die jeweiligen, hier nicht gezeigten Sitzbodenplatten einerseits am vorderen oberen Querholm 4 und dem jeweils äußeren oberen Längsholm 2a sowie in der Mitte an einem Lagerungsvorsprung der mittleren vertikalen Lagerstützen 20 für die Schwenklagerung der Einzelrükkenlehnenteile 14 (Fig. 2) ab.

Wie Fig. 1 verdeutlicht, besteht ein einteiliges Rückenlehnenteil 15 der Sitzbank aus einem Umfangsrohrkörper 16 von kreisförmigen Querschnitt, der einen oberen Querrohrabschnitt 17 und vertikale Endstücke 18 aufweist, die durch einen Querarm 19, bestehend ebenfalls einem Hohlprofil, verbunden bzw. verschweißt sind. Wie aus den nachstehenden Erläuterungen sowie Figuren noch deutlicher hervorgeht (vgl. z.B. Fig. 8), sind an den äußeren Enden des Querarmes 19 im wesentlichen rechtwinklig nach vorn weisende Lenker 21 als vertikale Flacheisen angeschweißt, die der Schwenklagerung des Rückenlehnenteiles 15 an den oberen Enden der Lagerstützen 20 dienen. Diese sind bei einteiliger Rückenlehne im Endbereich der oberen Längsholme 2a vertikal aufwärts vorspringend angeschweißt und dienen der Schwenklagerung des Rückenlehnenteiles 15 über die Lenker 21.

Praktisch dieselbe Konstruktion ist auch für die Schwenklagerung der Einzelrückenlehnenteile 14 gemäß Fig. 2 und 3 gewählt, wobei zur Bildung der Lagerungsachsen 22 Fig. 3, 8) für die jeweils innenliegenden Lenker 21 der beiden Einzelrückenlehnenteile 14 im mittleren Bereich des hinteren oberen Querholmes 4 mit diesem zwei weitere Lagerstützen 20 verschweißt und die zugehörigen Lenker 21 im Bereich des oberen Endes der Lagerstützen 20 schwenkbar gelagert sind.

Schließlich weisen die Einzelrückenlehnenteile 14 (Fig. 2) bzw. das einteilige Rückenlehnenteil 15 an dem unteren Querarm 19 der jeweiligen Rükkenlehne 14, 15 angeschweißte, nach unten weisende und sich im wesentlichen in der Hauptebene des jeweiligen Rückenlehnenteiles 14 bzw. 15 erstreckende Heber 23 auf, die ebenfalls als Flacheisen ausgebildet sind. In ihrer Länge sind diese so bemessen, daß sie sich bei einer Rückwärtsschwenkbewegung des Rückenlehnenteiles 14 bzw. 15 oberhalb des tiefer gelegten, hinteren oberen Querholmes 4 in eine im wesentlichen horizontale Endlage (vgl. Fig. 3, Fig. 6, Fig. 7) verschwenken und dabei den hinteren Bereich der auf dem äußeren oberen Längsholm 2 aufruhenden Sitzbodenplatte erfassen und diesen anheben, so daß die Heber in einer heruntergeklappten Stellung des Rückenlehnenteiles 14, 15 zur Bildung einer Liegefläche mit dem Sitzteil ein Auflager für den hinteren Bereich der Sitzbodenplatte bilden und unter Ausgleich der ursprünglichen Neigung des Sitzteiles nach hinten unten eine tatsächlich ebene Sitzteil/Rückenlehnen-Liegefläche einrichten (vgl. Fig. 6, Fig. 7).

Wie insbesondere aus den Fig. 1 bis 3 ersichtlich, ist mit dem oberen Querrohrabschnitt 17 des Rückenlehnenteiles 15 bzw. der Einzelrückenlehnenteile 14 ein Kopfstützenhalter 24 schwenkbar und in unterschiedlichen Stellungen verrastbar, verbunden, der aus einem verstrebten, U-förmigen Rohrprofil besteht. Auf den Kopfstützenhalter 24 kann ein Kopfstützenpolster (vgl. Fig. 6) aufgeschoben werden. Für den Fall, daß, z.B. in einer Liegestellung, die Kopfstütze nicht benötigt wird, dient der Kopfstützenhalter 24 zugleich als Abstützung für die in eine horizontale Liegeposition verschwenkte Rückenlehne, wie dies in Fig. 3 angedeutet ist. In ihrer heruntergeklappten Stellung wird der Sitzrükkenlehnenteil 14 bzw. 15 durch einen jeweils innen an den Lagerstützen 20 angeschweißten Anschlagwinkel, gegen den in einer verschwenkten Stellung der zugehörige Lenker 21 des Sitzrückenlehnenabschnittes 14 bzw. 15 zur Anlage kommt, gehalten.

Auf diese Weise wird eine sehr stabile, zugleich leicht ortsveränderliche multifunktionale Sitzbank geschaffen, die sich insbesondere auch zum nachträglichen Einbau in Transporter oder Reisemobile eignet.

Fig. 4 zeigt im einzelnen die Rollführungs- und Arretierungsvorrichtung der Sitzbank an einem vorderen Ende eines der unteren Längsholme 3. Am vorderen Ende des unteren Längsholmes 3 ist gegenüberliegend ein Paar Lagerungsbleche 7 angeschweißt, zwischen denen die Laufrolle 8 durch einen Lagerungsbolzen 25 drehbar gelagert ist. An der Oberseite der Lagerungsbleche 7 ist das Ende des vorderen, unteren Querholmes 5 aufgeschweißt, eine Vertikalstütze 26 bildet den vorderen Eckbereich des Profilrohr-Grundrahmens zur Verbindung mit den oberen Längsholmen 2 sowie dem oberen Querholm 4. Unmittelbar hinter dem vorderen unteren Querholm 5 befindet sich die Betätigungswelle 10 mit dem Betätigungspedal 10a und den Blechstreifen 11 als Übertragungshebel für die Axialbetätigung des Arretierungsbolzens 12. In Fig. 4 ist die Bodenschiene, in die die Laufrolle 8 sowie der Arretierungsbolzen 12 eingreifen, nicht gezeigt. Ebenfalls zum formschlüsigen Eingriff mit der Bodenführungsschiene 9 ist ein T-Profilstück 27 an der Unterseite des unteren Längsholmes 3 angeschweißt, um zu verhindern, daß die Sitzbank durch vertikal aufwärts gerichtete Kräfte von den Bodenführungsschienen getrennt wird.

Fig. 5 zeigt als Einzelheit einen Schnitt durch die Laufrollenlagerung mit Bodenschiene 9. Die Laufrolle 8 besteht vorzugsweise aus einem integralen Zylinderkörper aus Polyamid-Kunststoff mit einem mittleren Führungsscheibenvorsprung 8a, der in die Bodenführungsschiene 9 zur Rollführung der Sitzbank eingreift. Ferner sind integral einstükkig sich beiderseits des Führungsscheibenvorsprunges 9 erstreckende Laufzylinderabschnitte 8b der Laufrolle 8 vorgesehen, die einen gleichen, gegenüber denjenigen des Führungsscheibenvorsprunges 8a verminderten Durchmesser aufweisen und in Rollkontakt mit oberen Laufflächen 9a der zugehörigen Bodenführungsschiene 9 stehen. Auf diese Weise wird eine an den vier unteren Eckpunkten der Sitzbank vorgesehene Rollführung der Sitzbank realisiert, die nach Lösen der Arretierungsbolzen 12 eine spielend leichte Verschiebung der Sitzbank in Fahrzeuglängsrichtung oder ein bequemes Einsetzen bzw. Herausnehmen der Sitzbank aus dem Fahrzeug gestattet.

Die Fig. 6 und 7 verdeutlichen in schematischer Darstellung noch einmal die Funktion der Heber 23 am unteren Querarm 19 des Rückenlehnenteiles 15 bzw. der Einzelrückenlehnenteile 14. Fig. 6 zeigt schematisch die Sitzbank mit Polsterung des Sitzteiles 28 sowie des Rückenlehnenteiles 15 mit Kopfstütze in einer aufrechten Sitzposition. Unter der Annahme, daß die Sitzbank mit der einteiligen Rückenlehne 15 versehen ist, liegt das einteilige Sitzteil vorn auf dem erhöht positionierten oberen vorderen Querholm 4 auf, während der hintere Bereich des Sitzteiles 28 sich auf den hinteren Enden der beiden oberen Längsholme 2 abstützt. Nach Entriegelung der hier nicht gezeigten Schwenkbetätigungsvorrichtung für das Rückenlehnenteil 15 mit Kopfstütze 29 zum Herstellen einer horizontalen Liegeposition kann das Rückenlehnenteil 15 in eine im wesentlichen horizontale Position verschwenkt werden, die in Fig. 7 dargestellt ist. Gleichzeitig greifen die mit dem unteren Querarm des Rückenlehnenteiles 19 starr verbundenen Heber 23 von unten gegen den hinteren Abschnitt der Sitzbodenplatte 13 des Sitzteiles 28 und heben diesen Bereich so an, daß sowohl mit dem auf dem vorderen oberen Querholm 4 aufliegenden vorderen Abschnitt des Sitzteiles 28 als auch mit dem Rückenlehnenteil 15 bzw. dessen Polsterung eine gleichmäßige ebene Liegefläche erreicht wird.

In den schematischen Darstellungen der Fig. 6 und 7 ist die Rollführungs- und Arretierungseinrichtung für die Sitzbank mit den Laufrollen 8 etc. jeweils nicht mitdargestellt.

Die vorbeschriebene Einrichtung zur Herstellung einer tatsächlich ebenen Liegefläche hat besondere Bedeutung auch für eine Ausführungsform der Erfindung, die zwei separate Sitzteile und getrennte Einzelrückenlehnenteile 14, wie in Fig. 2 gezeigt, aufweist und bei der mittlere Lagerstützen 20 zur individuellen Schwenklagerung der Einzelrückenlehnenteile 14 paarweise innerhalb der Liegefläche vorgesehen sind, wenn beide Einzelrükkenlehnenteile 14 in eine Liegeposition gebracht werden. Aufgrund der Wirkung der Heber 23 und der Anhebung der Sitzbodenplatte 13 bzw. des gesamten Sitzteiles 28 jeweils im hinteren Bereich wird die Polsterung der Sitzteile auch im Bereich der Schwenkvorrichtung für die Einzelrückenlehnenteile 14 deutlich über die Oberkante der Lage 26 angehoben, so daß auch in diesem Fall keine Beeinträchtigung, Druckbeschwerden etc. für Personen entstehen, die die so gebildete Liegefläche benutzen.

Einzelheiten der Rückenlehnen-Schwenkvorrichtung bzw. Vorrichtung zur Arretierung des Rükkenlehnenteiles 15 bzw. der Einzelrückenlehnenteile 14 in ihrer aufrechten Sitzposition werden nachfolgend anhand von Fig. 8 erläutert. Aus dieser Figur wird zugleich die Schwenklagerung der Rükkenlehnenteile 14, 15 mit Hilfe der die Schwenkachse 22 bildenden Lagerungsbolzen im oberen Bereich der Lagerstützen 20 deutlich.

Fig. 8 zeigt lediglich die Einzelheiten der Rückenlehnen-Arretierungsvorrichtung, ohne daß hierbei die übrigen Elemente des Profilrohrrahmens etc. mit dargestellt sind. Eine derartige Arretierungsvorrichtung für die Sitzposition der Rückenlehnenteile 14, 15 ist für den Fall einer einteiligen Rückenlehne 15 jeweils einfach vorgesehen, während dann, wenn zwei separate Einzelrückenlehnenteile 15 auf diese Weise zu arretieren bzw. schwenkzuverstellen sind, jeder der oberen Längsholme 2 und benachbarte hintere Bereiche der Sitzbank eine entsprechende Vorrichtung an beiden Seiten der Sitzbank aufweisen.

Wie bereits dargelegt, ist im hinteren Bereich mit dem entsprechenden äußeren oberen Längsholm 2 vertikal aufrecht die Lagerstütze 20 aus Flachbandeisen verschweißt, die mit einem Bolzen 31 eine obere Schwenklagerungsachse 22 für das zugehörige Rückenlehnenteil 14 bzw. 15 bildet. Diese Schwenklagerung wird im übrigen durch den Lenker 23 gebildet, der fest mit dem Ende des Querarmes 19 des Rückenlehnenteiles 15 verschweißt ist. Ein innenliegender Anschlagwinkel, gegen den der zugehörige Lenker 21 anliegt, bildet die Lagesicherung für das in seine horizontale Liegestellung herabgeschwenkte Sitzrückenlehnenteil 15. Zugleich kann das Seitenende des oberen, hinteren Querholmes 4 bzw. ein unteres Ende der Lagerstütze 20 eine Befestigung für eine Seite einer, hier nicht dargestellten, Sitzgurtanordnung bilden.

Überdies weist der Querarm 19 an seiner Unterseite eine Eingriffsplatte 32 auf, die eine rechteckförmige Rastausnehmung 33 zum Eingriff mit einem formentsprechenden Rastvorsprung 34 aufweist. Dieser ist an einer Schwenkplatte 35 vorgesehen, die, in Richtung des Verriegelungseingriffes mit der Eingriffsplatte 32, durch eine Vorspannfeder 36 vorgespannt, schwenkbar an dem hinteren oberen Querholm 4 durch ein Scharniergelenk 37 gelagert ist. Andererseits ist durch hier nicht näher dargestellte Zylinderführungselemente eine Betätigungsstange 38, die an ihrem Vorderende einen Druckbetätigungs-Handgriff 39 aufweist, durch den oberen Längsholm 2 geführt und an ihrem hinteren Ende durch ein abgekröpftes Stangenteil 38a mit einem Gleitbetätigungsstück 40 verbunden, das gegen die federnd vorgespannte Schwenkplatte 37 anliegt.

Bei Druckbetätigung der Betätigungsstange 38 in Pfeilrichtung verschwenkt das Gleitbetätigungsstück 40 die Schwenkplatte 35 um die Achse des Scharniergelenkes 37 nach unten, so daß der Rastvorsprung 34 aus der Rastausnehmung 33 frei kommt und das Rückenlehnenteil nach hinten verschwenkt werden kann.

Auf diese Weise wird eine sehr einfache und zugleich leicht bedienbare Arretierungs- bzw. Entriegelungsvorrichtung für die Schwenkverstellung des Rückenlehnenteiles 15 bzw. der Einzelrückenlehnenteile 14 mit entsprechend zweiseitig vorgesehenen Arretierungsvorrichtungen geschaffen.

Die Sitzbank kann, abweichend von der vorbeschriebenen Gestaltung, auch mit einem das Rükkenlehnenteil 14 bzw. 15 und das Sitzteil variabel verbindenden Schwenkbeschlag versehen sein, durch den es auch möglich ist, Rückenlehne und Sitzteil sowohl unabhängig voneinander als auch in fester Winkelposition zueinander (gemeinsam) zu verschwenken, um z.B. die Zugänglichkeit zu den Stauräumen zu gewährleisten oder zu verbessern, die Sitzbank von einer Sitz- in eine Liegeposition zu bringen bzw. die Sitzorientierung in bezug auf die Längsachse des Fahrzeuges umzukehren und das Rückenlehnenteil zum Sitzteil und das Sitzteil zum heckseitig zugewandten Rückenlehnenteil umzuwandeln.

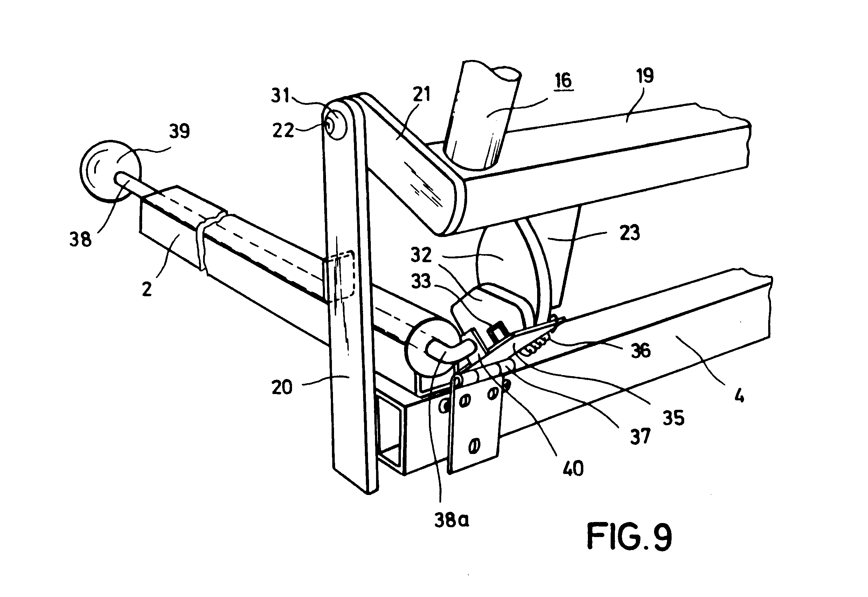

In Fig. 9 ist schließlich noch in einer Einzelheit die Arretierungs- bzw. Verschwenkungsvorrichtung für den Kopfstützenhalter 24 am oberen Querrrohrabschnitt 17 des Rückenlehnenteiles 15 bzw. der Einzelrückenlehnenteile 14 dargestellt. Hierfür ist ein federnd in axialer Richtung vorgespannter Eingriffsbolzen 41 in einer Gleitführung in einem der beiden Rohransätze des U-förmigen Kopfstützenhalters 24 vorgesehen, der in Verbindung mit einer Langlochausnehmung des Kopfstützenhalters 24 einseitig herausgeführtes Betätigungsende 41 a aufweist und in Abhängigkeit von seiner Eingriffslage mit seinem vorderen Zylindervorsprung 43 in Arretierungseingriff mit Bohrungen 42 in dem oberen Querrohrabschnitt 17 des Umfangrohrkörpers 16 des Rückenlehnenteiles 14 bzw. 15 ist. Gegebenenfalls kann hierfür auch eine separate Hülse in den Querrohrabschnitt 17 eingesetzt sein. Der Eingriffsbolzen 41 mit dem vorderen Zylindervorsprung 43 einschließlich des Betätigungsendes 41 a des Eingriffsbolzens 41 sind einstückig mit einer äußeren Gleitbetätigungshülse 44 ausgebildet, durch die der Eingriffsbolzen 41 von außen entgegen der Kraft einer Vorspannfeder 45, die gegen einen Federlagerstift 46 anliegt, axial verlagerbar ist. In Abhängigkeit von der Verschwenkung und dem Eingriff des Eingriffsbolzens 41 kann der Kopfstützenhalter 24, wie in Fig. 9 gezeigt, in einer aufrechten Sitzposition oder aber rechtwinklig hierzu für die Abstützung des Rückenlehnenteiles 14 bzw. 15 (s. Fig. 7) oder aber in einem eingeklappten Zustand innerhalb des Umfangsrohrkörpers 16 angeordnet werden.

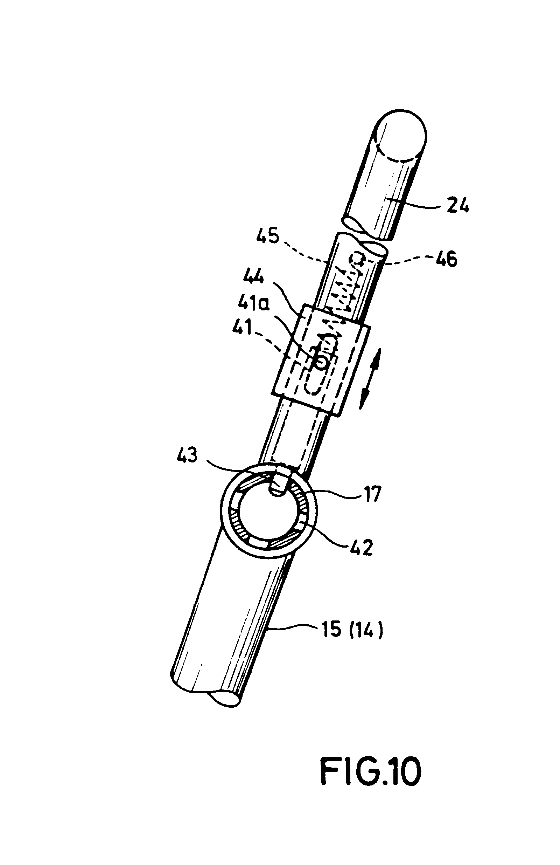

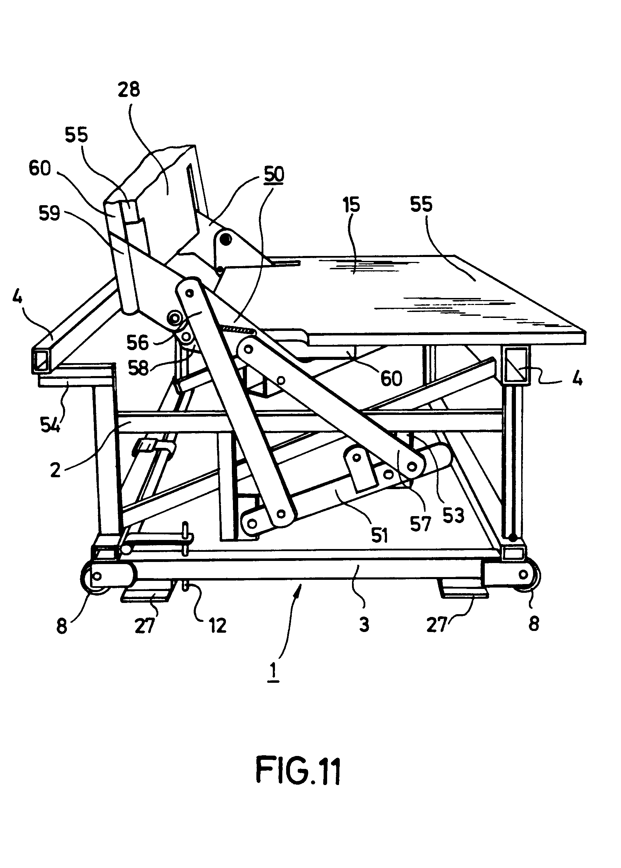

Ein weiteres Ausführungsbeispiel der Sitzbank mit nur geringfügig gegenüber den voranstehend erläuterten Ausführungsbeispielen modifiziertem Profilrohrrahmen 1 ist in den Fig. 10 und 11 für die Sitzposition (Fig. 10) sowie Liegeposition (Fig. 11) dargestellt. Dieses Ausführungsbeispiel unterscheidet sich von den vorangegangenen vor allem dadurch, daß die einteilige Rückenlehne 15 mit dem einteiligen Sitzteil 28 durch beiderseits an dem Profilrohrrahmen 1 befestigte, herkömmliche Viergelenk-Schwenkbeschläge 50 verbunden sind, wodurch eine beliebige Vertauschung von Sitz- und Rückenlehnenteil durch entsprechendes Umklappen möglich ist und auch eine Liegeposition (Fig. 11) eingenommen werden kann. In Fig. 10 fungiert das Rückenlehnenteil 15 als Sitzteil (entgegengesetzte Sitzposition in bezug auf Fahrtrichtung) während das ursprüngliche Sitzteil 28 als Rückenlehne aufgestellt ist. Der Schwenkbeschlag 50 ist jeweils seitlich an dem Profilrohrrahmen 1 mit seinem Basisarm 51 an senkrecht von einem Längsholm 2 des Profilrohrrahmens 1 sich vertikal abwärts erstreckenden Haltern 53 befestigt. Die Halter 53 an jeder Seite besitzen unterschiedliche Länge, wodurch eine geneigte Befestigung des Basisarmes 51 des Viergelenk-Schwenkbeschlages 50 und damit die entsprechende Montageposition gesichert ist. Im übrigen ist der Profilrohrrahmen 1 im oberen Bereich durch Rohrstücke 54 verbreitert und der vordere obere Querholm 2 weist im wesentlichen die gleiche Höhe wie der hintere obere Querholm 4 auf. Entsprechend können die Holzplatten 55, die den Grundkörper des Sitzrückenlehnenteiles 15 bzw. des Sitzteiles 28 bilden, auf den beiden oberen Querholmen 2, 4 abgestützt werden. Die Lenker 56, 57 des Schwenkbeschlages 50 greifen in bekannter Weise gelenkig einerseits an dem Basisarm 51 und andererseits an den Beschlagteilen 58, 59 an, die ihrerseits rückseitig über Distanzstücke 60 an den Holzplatten 55 der Rückenlehne 15 bzw. Sitzteiles 28 angeschraubt sind. Die Holzplatten 55 sind einerseits mit einer Aussparung zur Aufnahme des Schwenkgelenkes 50 versehen bzw. andererseits geschlitzt, um den Durchgriff der Beschlagteile des Viergelenk-Schwenkbeschlages 50 zu ermöglichen (in den Fig. 10 und 11 hinten). Durch entsprechende Abpolsterung wird vermieden, daß bei Gestaltung der Sitzbank als Liegefläche (Fig. 11) die Beschlagteile 58, 59 störend sind.

Im übrigen weist der Profilrohrrahmen 1 den bereits in Verbindung mit den oben erläuterten Ausführungsbeispielen beschriebenen Aufbau auf. Durch den Einsatz eines Viergelenk-Schwenkbeschlages 50 kann die Variabilität der Sitzbank weiter erhöht und auch die Zugänglichkeit zu dem Bereich innerhalb des Profilrohrrahmens 1 verbessert werden.

## Patentansprüche

1. Sitzbank für Reisemobile, Transporter etc. mit einem Sitzteil und einem verschwenkbaren Rückenlehnenteil sowie einer Führungs- und Arretierungseinrichtung für eine Verstellung der Sitzbank in Fahrzeuglängsrichtung, gekennzeichnet durch einen Profilrohrrahmen (1) mit paarweise einander im wesentlichen gegenüberliegenden oberen und unteren Längsholmen (2, 3) sowie oberen und unteren Querholmen (4, 5), wobei die unteren Längs- und Querholme (3, 5) einen Grundrahmen (1') bilden, mit an der Unterseite des Grundrahmens (1') gegenüberliegend paarweise drehbar gelagerten Laufrollen (8) sowie Gleitprofilkörpern (27) zum Eingriff in ein Paar, sich in Fahrzeuglängsrichtung erstreckenden Bodenführungsschienen (9) und mit Arretierungsbolzen (12), die, gesteuert von einer Betätigungswelle (10), die unteren Längsholme (3) im wesentlichen vertikal zum Arretierungseingriff mit den Bodenführungsschienen (9) durchsetzen und durch in Eingriffsrichtung federnd vorgespannte Übertragungshebel (11) mit der Betätigungswelle (10) verbunden sind.

2. Sitzbank nach Anspruch 1, dadurch gekennzeichnet, daß zumindest einer der oberen Längsholme (2) eine Aufnahme für ein Rückenlehnen-Schwenkbetätigungsorgan bildet.

3. Sitzbank nach zumindest einem der vorhergehenden Ansprüche 1 oder 2, dadurch gekennzeichnet, daß der vordere obere Querholm (5) sowie die oberen Längsholme (2) ein Auflager einer Sitzbodenplatte (13) des Sitzteiles (28) bilden, die im hinteren Bereich zumindest auf einem der oberen Längsholme (2) abstützbar ist und der vordere, obere Querholm (4) auf einem Niveau höher als die oberen Querholme (2) angeordnet ist.

4. Sitzbank nach zumindest einem der vorhergehenden Ansprüche 1 bis 3, dadurch gekennzeichnet, daß der Profilrohrrahmen (1) im Bereich der hinteren Enden der oberen Längsholme (2) vertikal vorspringende Stützlagerkörper (20) zur Schwenklagerung des Rückenlehnenteiles (14, 15) aufweist, und daß das Rückenlehnenteil (14, 15) Lenker (21) aufweist, die am oberen Ende des zugehörigen Stützlagerkörpers (20) um eine Schwenkachse (22) schwenkbar gelagert sind.

5. Sitzbank nach Anspruch 4, dadurch gekennzeichnet, daß die Lenker (21) integral mit einem unteren Querarm (19) des Rückenlehnenteiles (14, 15) vorgesehen sind und im wesentlichen in der Verlängerung zumindest eines oberen Längsholmes (2) zumindest eine Verriegelungseinrichtung für das Rückenlehnenteil (14, 15) in Verbindung mit dem Querarm (19) desselben sowie in Verbindung mit dem hinteren Querholm (4) des Profilrohrrahmens (1) vorgesehen ist.

6. Sitzbank nach zumindest einem der vorhergehenden Ansprüche 1 bis 5, dadurch gekennzeichnet, daß das Rückenlehnenteil (15) einteilig ausgebildet und die vertikalen Stützlagerkörper (20) außen am hinteren Ende der oberen Längsholme (2) vorgesehen sind, das Rükkenlehnenteil (15) einen Rohrrahmen (16) sowie einen unteren Querarm (19) aufweist, an dessen Enden im wesentlichen rechtwinklig vorspringend der jeweilige Lenker (21) zur Verbindung mit dem jeweils oberen Lagerungsende des vertikalen Stützlagerkörpers (20) vorgesehen ist.

7. Sitzbank nach Anspruch 6, dadurch gekennzeichnet, daß von dem Querarm (18) im wesentlichen in der Hauptebene des Rückenlehnenteiles (15) sich nach unten erstreckende Heber (23) zum Eingriff unter eine Sitzbodenplatte (13) des Sitzteiles (28) bei Schwenkbewegung des Rückenlehnenteiles (15) aus einer aufrechten Sitzposition in eine horizontale Liegeposition vorgesehen sind.

8. Sitzbank nach einem der vorhergehenden Ansprüche 1 bis 7, dadurch gekennzeichnet, daß an einem oberen Querrohrabschnitt (17) des Rückenlehnenteiles (14, 15) schwenkbar zumindest ein in unterschiedlicher Winkellage arretierbarer Kopfstützenhalter (24), insbesondere ein durch den Querrohrabschnitt geschlossener, vorzugsweise verstrebter, U-Rohrbügel vorgesehen und auf diesem ein Kopfstützenpolster (30) aufsteckbar ist.

9. Sitzbank nach zumindest einem der vorhergehenden Ansprüche 1 bis 8, dadurch gekennzeichnet, daß in einer im wesentlichen horizontalen, verschwenkten Stellung des Rückenlehnenteiles 14, 15) ein hinterer Bereich des oder der Sitzteile (28) der Sitzbank durch die Heber (23) des Rückenlehnenteiles (14, 15) angehoben und eine aus Sitzund Rückenlehnenteilen (28; 14, 15) bestehende, planare Liegefläche gebildet ist.

10. Sitzbank nach zumindest einem der vorhergehenden Ansprüche 1 bis 9, dadurch gekennzeichnet, daß nahe des hinteren Endes der oberen Längsholme (2) mit dem Querarm (19) des Rückenlehnenteiles (14, 15) eine Eingriffsplatte (32) verbunden ist, die mit einem Rasteingriffselement (33) versehen ist, zum Eingriff mit einem schwenkbaren Gegenrasteingriffselement (34) zur Verriegelung des Rükkenlehnenteiles (14, 15) in einer aufrechten Sitzposition.

11. Sitzbank nach Anspruch 10, dadurch gekennzeichnet, daß das Gegenrasteingriffselement (34) in Verbindung mit einer Schwenkplatte (35) vorgesehen ist, die in Eingriffsrichtung federnd vorgespannt an dem hinteren, oberen Querholm gelagert und mit einem Betätigungsstück (40) einer Schwenkbetätigungsvorrichtung für das Rückenlehnenteil (14, 15) in Eingriff bringbar ist.

12. Sitzbank nach Anspruch 10 oder 11, dadurch gekennzeichnet, daß die Schwenkbetätigungsvorrichtung eine durch den oberen Längsholm (2) geführte, an der Vorderseite derselben einen Betätigungshandgriff (39) aufweisende, federnd vorgespannte Druckbetätigungsstange (38) aufweist, die mit dem Betätigungsstück (40), vorzugsweise über einen abgewinkelten Zapfen (38a), zur Anlage gegen die Schwenkplatte (35) verbunden ist.

13. Sitzbank nach Anspruch 1, dadurch gekennzeichnet, daß das Sitzteil (28) und das Rükkenlehnenteil (15) durch je einen, seitlich an dem Profilrohrrahmen (1) befestigten Viergelenk-Schwenkbeschlag (50) miteinander verbunden und das Sitzteil und das Rückenlehnenteil unabhängig voneinander verschwenkbar sind.

14. Sitzbank nach Anspruch 13, dadurch gekennzeichnet, daß ein Basisarm (51) des Viergelenk-Schwenkbeschlages (50) geneigt durch vertikale Halter (53) an jeder Seite des Profilrohrrahmens (1) befestigt ist.

15. Lagerungseinrichtung für verlagerbare Fahrzeugeinbauten in Wohnwagen, Reisemobilen oder dgl., mit einer Bodenführungsschienenanordnung im Fahrzeugboden, insbesondere für eine Sitzbank nach Anspruch 1, gekennzeichnet durch einen vierseitigen Grundrahmen (1') mit Laufrollen (8) und Gleitprofilkörpern (27) an der Unterseite desselben, sowie mit einer Arretierungsvorrichtung (10, 11, 12) zum Eingriff in die Bodenführungsschienenanordnung (9).

16. Lagerungseinrichtung nach Anspruch 15, dadurch gekennzeichnet, daß der Grundrahmen (1') aus miteinander verschweißten Hohlprofilholmen (3, 5) gebildet sind.

17. Lagerungseinrichtung nach Anspruch 15 oder 16, dadurch gekennzeichnet, daß der Grundrahmen (1') aus paarweise einander gegenüberliegenden Längsholmen (3) und Querholmen (5) besteht, die Laufrollen (8) an den Enden der Längsholme (3) sowie Gleitprofilkörper (27) an der Unterseite der in Fahrzeuglängsrichtung sich erstreckenden Längsholme (3) vorgesehen sind, und daß im wesentlichen parallel zu dem in Fahrtrichtung vorderen Querholm (5) eine Betätigungswelle (10) drehbar gelagert ist, die durch Übertragungshebel (11) mit die Längsholme (3) vertikal durchsetzenden Arretierungsbolzen (12) verbunden und in Eingriffsrichtung der Arretierungsbolzen (12) zum Eingriff in die Bodenführungsschienenanordnung (9) federnd vorgespannt ist.

18. Lagerungseinrichtung nach zumindest einem der vorhergehenden Ansprüche 15 bis 17, dadurch gekennzeichnet, daß die Laufrollen (8) durch gegenüberliegende Lagerungsbleche (7) an den Enden der Längsholme (3) gelagert sind und einen mittleren Führungsscheibenvorsprung (8a) zum Eingriff in eine Bodenführungsschiene (9) sowie sich beiderseits des Führungsscheibenvorsprunges (8a) erstreckende Laufzylinderabschnitte (8b) mit gegenüber dem Führungsscheibenvorsprung (8a) verringertem Durchmesser aufweisen, die in Rollkontakt mit oberen Laufflächen der Bodenführungsschiene (9) der Bodenführungsschienenanordnung bringbar ist.

19. Lagerungseinrichtung nach zumindest einem der vorhergehenden Ansprüche 15 bis 18, dadurch gekennzeichnet, daß die Gleitprofilkörper (27) U-Profilstücke sind, die fest mit der Unterseite der Längsholme (3) verbunden und benachbart zu einer Laufrolle (8) angeordnet sind.

20. Lagerungseinrichtung nach zumindest einem der vorhergehenden Ansprüche 15 bis 19, dadurch gekennzeichnet, daß die Betätigungswelle (10) sich transversal entlang des vorderen Querholmes (5) erstreckt und mit einem Betätigungspedal (10a) verbunden ist, die Übertragungshebel (11) fest mit der Betätigungswelle (10) und in einer unverlierbaren Losverbindung mit den Arretierungsbolzen (12) verbunden sind und diese benachbart zu den vorderen Gleitprofilkörpern (27) axial beweglich in Aufnahmebohrungen der Längsholme (3) des Grundrahmens (1') aufgenommen sind.

21. Lagerungseinrichtung nach zumindest einem der vorhergehenden Ansprüche 15 bis 20, dadurch gekennzeichnet, daß auf dem Grundrahmen (1') eine Sitzbank angeordnet und integral einstückig mit dem Grundrahmen (1') ausgebildet ist.

22. Lagerungseinrichtung nach zumindest einem der vorhergehenden Ansprüche 15 bis 21, dadurch gekennzeichnet, daß auf dem Grundrahmen (1') Einbaumöbel als Fahrzeugeinbauten wie z.B. ein Schreibtischteil (70) oder Küchenteil befestigt sind.
